# EUROPÄISCHE PATENTANMELDUNG

(11) **EP 1 955 838 A2**
(43) Veröffentlichungstag der Anmeldung: **13.08.2008**
(21) Anmeldenummer: 08002488.8
(22) Anmeldetag: 11.02.2008
(51) Int. Cl.: B29C 47/34

(54) **Vorrichtung zur Unterstützung von Kunststoffprofilen**

(30) Priorität: 09.02.2007 DE 102007007196
(71) Anmelder: INOEX GmbH, 32547 Bad Oeynhausen (DE)
(72) Erfinder: Möller, Jörg, 32257 Bünde (DE)
(74) Vertreter: Seewald, Jürgen

(57) **Zusammenfassung**

Die vorliegende Erfindung betrifft eine Vorrichtung zur Unterstützung von Kunststoffprofilen, insbesondere von Rohren, in einer Extrusionslinie, mit einer an die Kontur des Kunststoffprofils anpassbaren Stützkontur. Aufgabe der Erfindung ist es, eine weitere derartige Vorrichtung zur Verfügung zu stellen. Gelöst wird diese Aufgabe dadurch, dass bei einer solchen Vorrichtung die Stützkontur aus einer an einem Teilumfang des Kunststoffprofils (5) anliegenden Gliederkette (16) besteht, wobei jedes Glied (17) der Gliederkette (16) eine im Betrieb an dem Kunststoffprofil (5) anliegende Stützfläche (17.1) und eine dieser gegenüberliegende Keilfläche (17.2) besitzt, die sich auf einer Gegenkeilfläche (15.1) eines ersten Grundrahmens (15) abstützt, und wobei die Keilflächen (17.2) und Gegenkeilfläche (15.1) zur radialen Verlagerung der Gliederkette (16) aufeinander verschiebbar sind.

## Beschreibung

Die vorliegende Erfindung betrifft eine Vorrichtung zur Unterstützung von Kunststoffprofilen, insbesondere von Rohren gemäß dem Oberbegriff des Anspruchs 1.

Eine derartige Vorrichtung zur Unterstützung von Kunststoffprofilen ist aus der DE 10 2004 059 515 B3 bekannt. Diese Vorrichtung besteht aus einem Zylinderabschnitt mit einer an den Querschnitt eines Kunststoffprofils angepassten Aufnahme zur linienförmigen Teilumfassung des Profilumfangs. Diese Aufnahme ist als eine in Umfangsrichtung des Zylinderabschnitts verlaufende Rinne ausgebildet, deren Breite sich von einem Ende zum anderen Ende des Zylinderabschnitts in Anpassung an verschiedene Profilgrößen des Kunststoffprofils konisch vergrößert. Der Zylinderabschnitt ist um eine quer zu der Rinne angeordnete Schwenkachse drehbar gelagert, um die Vorrichtung auf die jeweils produzierte Profilgröße einstellen zu können. Diese aus dem Stand der Technik bekannte Vorrichtung ermöglicht eine einfache, stufenlose Anpassung an die in einer Extrusionslinie gefahrenen Profildimensionen bei kontinuierlicher Teilumfassung des Profilumfangs. Des weiteren ist sie als Ausrüstung für einen Dimensionswechsel bei laufender Produktion geeignet.

Aufgabe der vorliegenden Erfindung ist es, eine weitere gattungsgemäße Stützvorrichtung zur Verfügung zu stellen. Diese Aufgabe wird erfindungsgemäß mit einer Stützvorrichtung gelöst, die die Merkmale des Anspruchs 1 aufweist.

Die als Gliederkette ausgebildete Stützkontur passt sich leicht an die Kontur des Kunststoffprofils an, so dass dieses durch die anliegende Stützfläche der Glieder der Gliederkette zuverlässig abgestützt ist. Dabei wird eine stufenlose Anpassung an verschiedene Profilgrößen des Kunststoffprofils auf einfache Weise dadurch erreicht, dass den Stützflächen der Glieder gegenüberliegende Keilflächen auf Gegenkeilflächen eines Grundrahmens gleiten, wodurch sich die Gliederkette radial verlagert.

In vorteilhafter Ausgestaltung der Erfindung ist parallel zum ersten Grundrahmen ein zweiter Grundrahmen mit einer Gegenkeilfläche angeordnet, die sich mit gleicher Steigung nahtlos oder mit nur geringer Lücke an die Gegenkeilfläche des ersten Grundrahmens anschließt. Durch diese zweistufige Ausführung der Vorrichtung wird der Bereich der abstützbaren Profilgrößen erweitert.

Andere vorteilhafte Ausgestaltungen der Erfindung ergeben sich aus den übrigen Unteransprüchen.

Die Erfindung wird nachstehend anhand von Ausführungsbeispielen näher erläutert. In der dazugehörigen Zeichnung zeigt in schematischer Weise:
- Fig. 1: eine Seitenansicht einer Rohrextrusionslinie,
- Fig. 2: eine Vorderansicht einer erfindungsgemäßen Vorrichtung mit Gliederkette und einem ersten Grundrahmen in Anpassung an einen großen Rohrdurchmesser,
- Fig. 3: einen Schnitt A-A gemäß Fig. 2,
- Fig. 4: einen Schnitt B-B gemäß Fig. 2,
- Fig. 5: eine Darstellung gemäß Fig. 2 mit an einem kleinen Rohrdurchmesser angepasster Vorrichtung,
- Fig. 6: einen Schnitt C-C gemäß Fig. 5,
- Fig. 7: einen Schnitt D-D gemäß Fig. 5,
- Fig. 8: einen perspektivischen Blick auf einen hälftig abgeschnittenen Grundrahmen mit einem symbolisch dargestellten, aufliegenden Glied der Gliederkette,
- Fig. 9: eine Vorderansicht einer erfindungsgemäßen Vorrichtung in einer zweiten Ausführungsform mit einem ersten und zweiten Grundrahmen und einer Gliederkette in Anpassung an einen großen Rohrdurchmesser,
- Fig. 10: einen Schnitt E-E gemäß Fig. 9,
- Fig. 11: einen Schnitt F-F gemäß Fig. 9,
- Fig. 12: eine Darstellung gemäß Fig. 9 in Anpassung an einen kleinen Rohrdurchmesser,
- Fig. 13: einen Schnitt G-G gemäß Fig. 12, und
- Fig. 14: einen Schnitt H-H gemäß Fig. 12.

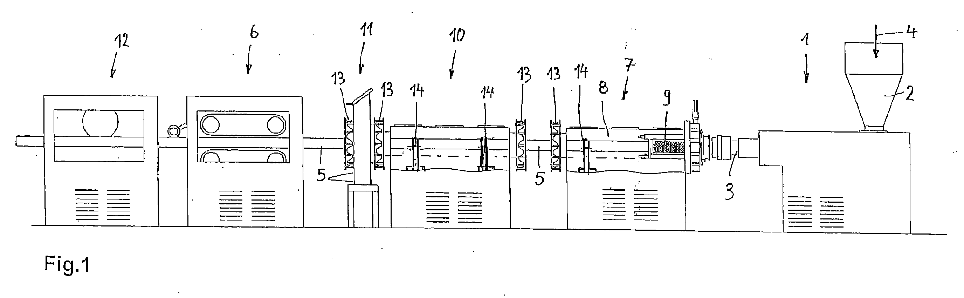

Die in Fig. 1 dargestellte Extrusionslinie umfasst eine Extrudereinheit 1 mit einem Aufgabetrichter 2, eine aus der Zeichnung nicht ersichtlichen Extruderschnecke und einen Rohrkopf 3. Über den Aufgabetrichter 2 wird ein thermoplastischer Kunststoff 4 in Granulat- oder Pulverform der Extrudereinheit 1 zugeführt. In dieser wird das Granulat bzw. Pulver erwärmt, geknetet und plastifiziert. Anschließend wird der Kunststoff 4 als formbare Masse durch die Extruderschnecke in den Rohrkopf 3 gefördert und dort durch einen ringförmigen Austrittsspalt gedrückt.

Nach dem Austritt aus dem Rohrkopf 3 wird das heiße, noch verformbare Rohr 5 mittels eines am Ende der Extrusionslinie angeordneten Raupenabzugs 6 durch eine Kalibrier- und Kühleinheit 7 gezogen, die einen Vakuumtank 8 mit einer an dessem Eingang angeordneten Kalibrierhülse 9 aufweist. Die Kalibrierhülse 9 ist stufenlos im Durchmesser einstellbar, so dass das extrudierte, noch formbare Rohr 5 auf den gewünschten Durchmesser fixiert werden kann. Nach dem Verlassen der Kalibrier- und Kühleinheit 7 tritt das Rohr 5 in eine Kühlstrecke 10 ein, in der es auf Raumtemperatur abgekühlt wird. Zwischen der Kühlstrecke 10 und dem Raupenabzug 6 ist ein Ultraschallscanner 11 angeordnet, in dem der Durchmesser und die Wanddicke des extrudierten Rohres 5 erfasst werden. Dem Raupenabzug 6 schließt sich eine Trennsäge 12 an, in der das Rohr 5 abgelängt wird. Zur Aufrechterhaltung eines Unterdrucks in der Kalibrier- und Kühleinheit 7, der Kühlstrecke 10 und dem Ultraschallscanner 11 sind Dichtungen 13 vorgesehen, die das durchlaufende Rohr 5 abdichtend umschließen.

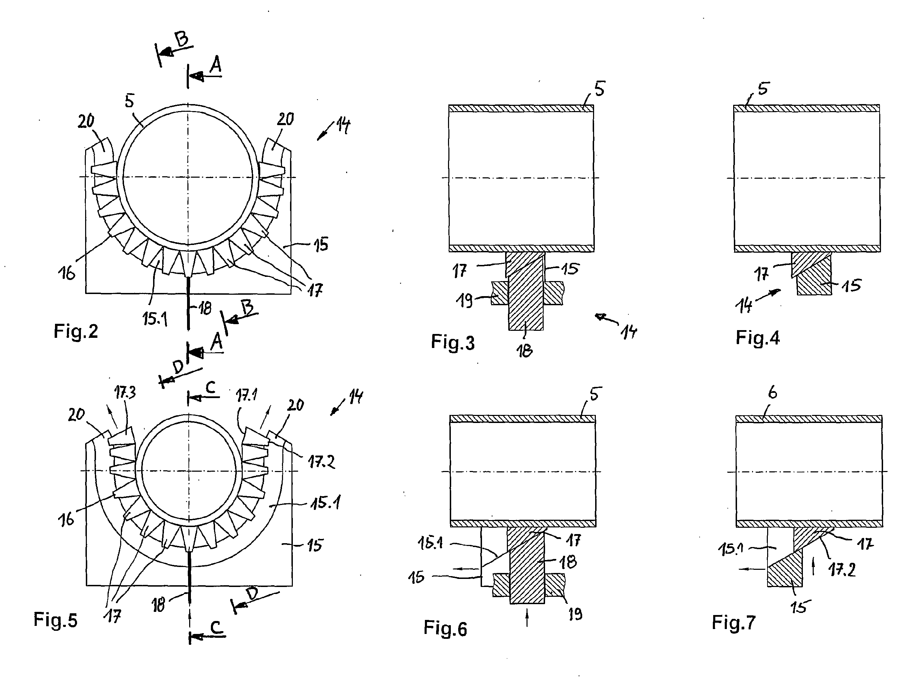

Da das extrudierte Rohr 5 erst nach Verlassen der Kühlstrecke 10 ausgehärtet, d.h. formstabil ist, muss es zuvor abgestützt werden, um ein Durchhängen und damit Deformieren zu vermeiden. Dazu sind in der Kühlstrecke 10 zwei und in der Kalibrier- und Kühleinheit 7 eine Rohrunterstützung 14 vorgesehen, deren Aufbau und Wirkungsweise nachstehend anhand der Fig. 2 bis 14, die zwei verschiedene Ausführungsformen zeigen, näher erläutert wird.

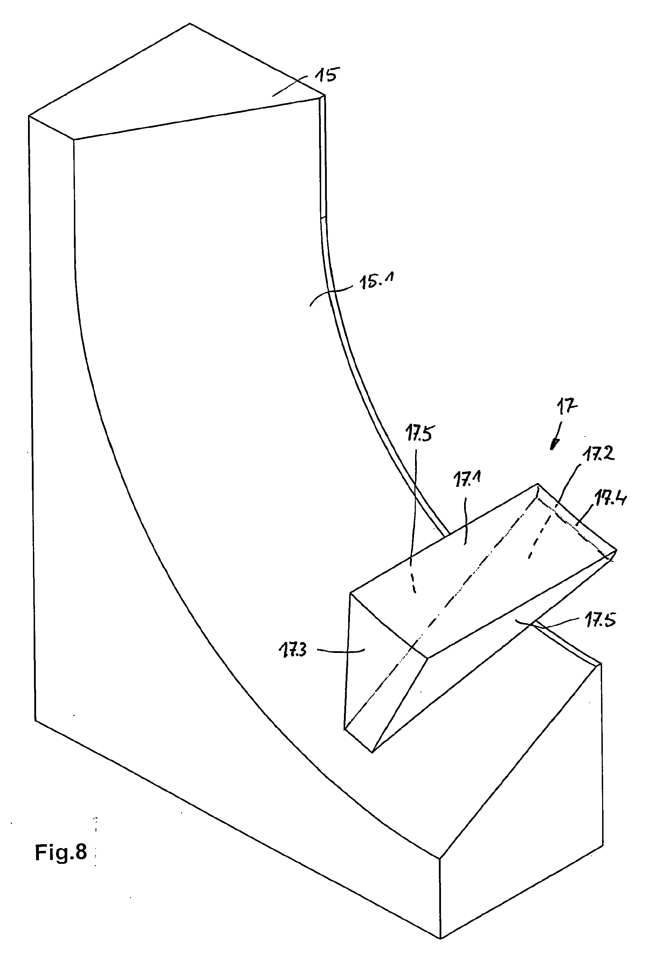

Die in den Fig. 2 bis 8 gezeigte Rohrunterstützung 14 gemäß einer ersten Ausführungsform der Erfindung weist einen Grundrahmen 15 und eine Gliederkette 16 auf. Letztere besteht, wie der Name schon sagt, aus einzelnen miteinander verbundenen Gliedern 17, deren Aufbau am besten aus Fig. 8 hervorgeht, die ein einzelnes Glied 17 zeigt. Dieses Glied 17 besitzt eine rechteckige Stützfläche 17.1, die im Betrieb am Umfang des extrudierten Kunststoffrohres 5 anliegt. Der Stützfläche 17.1 gegenüber liegt eine Keilfläche 17.2, die gegenüber der Stützfläche 17.1 ansteigt und die Form eines gleichschenkligen Trapezes hat. Die beiden Stirnflächen 17.3 und 17.4 besitzen ebenfalls die Form eines gleichschenkligen Trapezes, während die beiden Seitenflächen 17.5 die Form eines ungleichschenkligen Trapezes aufweisen.

Die Keilfläche 17.2 der Glieder 17 liegen auf einer Gegenkeilfläche 15.1 des Grundrahmens 15 auf, die die gleiche Steigung wie die Keilflächen 17.5 der Glieder 17 aufweist. Die Gegenkeilfläche 15.1 ist in Anpassung an den kreisförmigen Querschnitt des extrudierten Rohres 5 im Querschnitt ebenfalls kreisförmig ausgeführt, wobei der kleinste Durchmesser der Gegenkeilfläche 15.1 etwas größer ist als der größte abzustützende Durchmesser des extrudierten Rohres 5.

Die Glieder 17 bestehen aus Kunststoff mit guten Gleiteigenschaften, z. B. hochvernetztem Polyethylen, und sind an den Längsseiten ihrer Stützflächen 17.1 gelenkig über in der Zeichnung nicht dargestellte Filmscharniere miteinander verbunden. Ebenso ist es möglich, die einzelnen Glieder 17 über Klavierbänder gelenkig zu verbinden.

Der Grundrahmen 15 ist axial, d. h., in Rohrlängsrichtung, verschiebbar, während die Gliederkette 16 relativ zum Kunststoffrohr 5 und zum Grundrahmen 15 axial ortsfest ist. Diese Ortsfestigkeit wird dadurch erreicht, dass das unterste Glied 17 der Gliederkette 16 nach unten durch ein Schwert 18 verlängert ist, welches einen im Grundrahmen 15 vorgesehenen Schlitz durchsetzt, wobei dieser Schlitz eine solche axiale Ausdehnung hat, dass das ortsfeste Schwert 18 die erforderliche axiale Verschiebung des Grundrahmens 15 nicht behindert. Gleichzeitig erlaubt dieser Schlitz eine Auf- und Abwärtsbewegung des Schwertes 18. Das untere Ende des Schwertes 18 ist in einem ortsfesten Lager 19 geführt, welches ebenfalls eine Auf- und Abwärtsbewegung des Schwertes 18 und damit des mit diesem verbundenen Gliedes 17ermöglicht. In diesem Ausführungsbeispiel sind Glied 17 und Schwert 18 einstückig ausgeführt. Es ist aber auch eine zweistückige Ausführung möglich.

Die Fig. 2 bis 4 zeigen die Rohrunterstützung 14 bei der Abstützung des größtmöglichen Durchmessers des Kunststoffrohres 5. Die Glieder 17 der Gliederkette 16 sind entsprechend tief auf der Gegenkeilfläche 15.1 des Grundrahmens 15 heruntergefahren, wie aus den Fig. 3 und 4 hervorgeht.

Soll ein kleinerer Rohrdurchmesser unterstützt werden, so werden die Glieder 17 der Gliederkette 16 entsprechend auf der Gegenkeilfläche 15.1 des Grundrahmens 15 nach oben gefahren, wie in den Fig. 5 bis 7 dargestellt ist. Das geschieht durch axiales Verschieben des Grundrahmens 15. Die Fig. 5 bis 7 zeigen die Rohrunterstützung 14 bei der Abstützung des kleinstmöglichen Rohrdurchmessers.

Optimal für eine effektive Abstützung des Rohres 5 ist eine 180°-Umfassung des Rohrumfangs durch die Gliederkette 16. Die bei kleineren Rohrdurchmessern zur Abstützung nicht mehr erforderlichen Endglieder 17 der Gliederkette 16 werden daher vom Umfang des Kunststoffrohres 5 nach außen abgekippt, wie in Fig. 5 dargestellt. Dieses Abkippen erfolgt durch eine entsprechende, vom Kreisquerschnitt abweichende Abwinklung 20 der Gegenkeilfläche 15.1 an den freien Enden des Grundrahmens 15. Die vom Umfang des Kunststoffrohres 5 abgekippten Glieder 17 werden durch eine in der Zeichnung nicht dargestellte Führung in dieser abgekippten Form gehalten, so dass sie nicht auf den Rohrumfang zurückkippen können.

Wenn noch kleinere Rohrdurchmesser abgestützt werden sollen, als der in den Fig. 5 bis 7 dargestellte Rohrdurchmesser, ist in einer weiteren Ausführungsform der vorliegenden Erfindung ein zweiter Grundrahmen 21 vorgesehen, der eine Gegenkeilfläche 21.1 aufweist, die die gleiche Steigung wie die Gegenkeilfläche 15.1 des ersten Grundrahmens 15 besitzt.

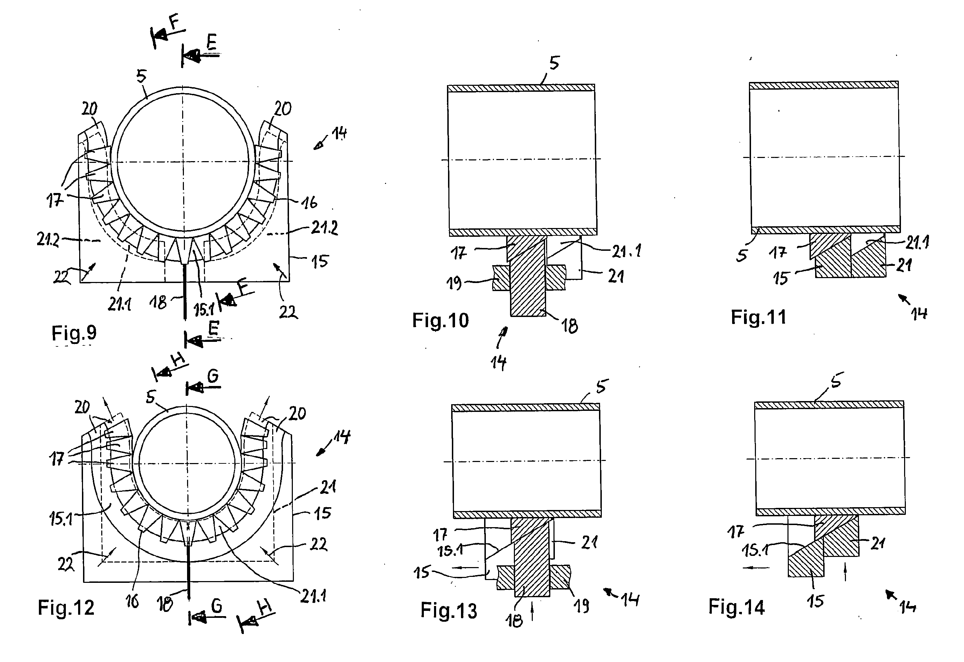

Der zweite Grundrahmen 21 ist hälftig geteilt, wobei seine beiden Hälften 20.2 radial auf das Kunststoffrohr 5 zustellbar sind, was in den Figuren 9 und 12 durch Pfeile 22 symbolisch dargestellt ist. Solange keine kleineren Rohrdurchmesser, als die in den Fig. 5 bis 7 bzw. 12 bis 14 gezeigten, abgestützt werden müssen, bleibt der zweite Grundrahmen 21 in einer Ruhestellung, die in den Fig. 9 bis 11 dargestellt ist. Dabei ist in Fig. 9 die Position dieser Ruhestellung des zweiten Grundrahmens 21 bzw. seiner beiden Hälften 22.2 strichliniert dargestellt. In dieser Ruhestellung behindert der zweite Grundrahmen 21 den freien Durchlass von Kunststoffrohren 5 größeren Durchmessers durch den ersten Grundrahmen 15 nicht.

Wenn ein kleinerer Rohrdurchmesser unterstützt werden soll, als der in den Fig. 5 bis 7 und 12 bis 14 gezeigte, wird der zweite Grundrahmen 21 aus seiner Ruhestellung in eine Arbeitsstellung gefahren, die in den Fig. 12 bis 14 dargestellt ist. Diese Arbeitsstellung wird durch radiales Zustellen (Pfeile 22) der beiden Hälften 21.2 des zweiten Grundrahmens 21 auf das Kunststoffrohr 5 erreicht. Die radiale Zustellung ist beendet, wenn die Gegenkeilfläche 21.1 die Gegenkeilfläche 15.1 des ersten Grundrahmens15 nahtlos oder nur mit einer geringen Lücke fortsetzt. Diese Arbeitsstellung geht am besten aus der Darstellung gemäß Fig. 14 hervor. Aus dieser Darstellung ist ersichtlich, dass nun die Glieder 17 der Gliederkette 16 auf der Gegenkeilfläche 21.1 durch axiales Verstellen der Grundrahmen 15 und 21 weiter nach oben gefahren werden können, wodurch die Unterstützung noch kleinerer Rohrdurchmesser möglich ist.

Auch bei dieser Ausführungsform der Erfindung wird die Gliederkette 16 durch ein mit dem untersten Glied 17 verbundenes Schwert 18 und ein entsprechendes Lagers 19 relativ zum Kunststoffrohr 5 und relativ zu dem ersten und zweiten Grundrahmen 15 bzw. 21 axial ortsfest gehalten.

## Patentansprüche

1. Vorrichtung zur Unterstützung von Kunststoffprofilen, insbesondere von Rohren, in einer Extrusionslinie, mit einer an die Kontur des Kunststoffprofils anpassbaren Stützkontur, **dadurch gekennzeichnet, dass** die Stützkontur aus einer an einem Teilumfang des Kunststoffprofils (5) anliegenden Gliederkette (16) besteht, wobei jedes Glied (17) der Gliederkette (16) eine im Betrieb an dem Kunststoffprofil (5) anliegende Stützfläche (17.1) und eine dieser gegenüberliegende Keilfläche (17.2) besitzt, die sich auf einer Gegenkeilfläche (15.1) eines ersten Grundrahmens (15) abstützt, und wobei die Keilflächen (17.2) und Gegenkeilfläche (15.1) zur radialen Verlagerung der Gliederkette (16) aufeinander verschiebbar sind.

2. Vorrichtung nach Anspruch 1, **dadurch gekennzeichnet, dass** parallel zum ersten Grundrahmen (15) ein zweiter Grundrahmen (21) mit einer Gegenkeilfläche (21.1) angeordnet ist, der aus einer Ruhestellung in eine Arbeitsstellung fahrbar ist, in der seine Gegenkeilfläche (21.1) die Gegenkeilfläche (15.1) des ersten Grundrahmens (15) fortsetzt.

3. Vorrichtung nach Anspruch 2, **dadurch gekennzeichnet, dass** der zweite Grundrahmen (21) in Längsrichtung hälftig geteilt ist und beide Hälften (21.2) radial auf das Kunststoffprofil (5) zustellbar sind.

4. Vorrichtung nach einem der vorstehenden Ansprüche, **dadurch gekennzeichnet, dass** die Stützflächen (17.1) und/oder die Keilflächen (17.5) und/oder die Gegenkeilflächen (15.1, 21.1) mit Mitteln zur Verringerung der Haftreibung ausgestattet sind.

5. Vorrichtung nach Anspruch 4, **dadurch gekennzeichnet, dass** die Glieder (17) aus hochvernetztem Polyethylen bestehen.

6. Vorrichtung nach Anspruch 5, **dadurch gekennzeichnet, dass** die Glieder (17) im Bereich der Längsseiten ihrer Stützflächen (17.1) über Filmscharniere gelenkig miteinander verbunden sind.

7. Vorrichtung nach Anspruch 5, **dadurch gekennzeichnet, dass** die Glieder (17) im Bereich der Längsseiten ihrer Stützflächen (17.1) über Klavierbänder gelenkig miteinander verbunden sind.

8. Vorrichtung nach einem der vorstehenden Ansprüche, **dadurch gekennzeichnet, dass** der erste und zweite Grundrahmen (15, 21) relativ zur Gliederkette (16) axial verschiebbar ist/sind, und die Gliederkette (16) über mindestens eines ihrer Glieder (17) axial ortsfest zum ersten und zweiten Grundrahmen (15, 21) und zum Kunststoffprofil (5) festgelegt ist.

9. Vorrichtung nach einem der vorstehenden Ansprüche, **dadurch gekennzeichnet, dass** für eine optimale Abstützung des Kunststoffprofils (5) nicht erforderliche Glieder (17) der Gliederkette (16) von der Kontur des Kunststoffprofils (5) abkippbar und in dieser Position gesichert sind.
